# EUROPEAN PATENT APPLICATION

(11) **EP 4 528 971 A1**
(43) Date of publication of application: **26.03.2025**
(21) Application number: 23888945.5
(22) Date of filing: 12.10.2023
(51) Int. Cl.: H02J 7/00, B60L 58/18, G01R 31/382, G01R 31/392

(54) **BATTERY SYSTEM AND PARALLEL PACKS CONTROL METHOD USING THE SAME**

(30) Priority: 08.11.2022 KR 20220147905; 08.06.2023 KR 20230073573
(71) Applicant: LG Energy Solution, Ltd., Seoul 07335 (KR)
(72) Inventor: CHOI, Moon Gyu, Daejeon 34122 (KR)
(74) Representative: Plasseraud IP
(86) International application number: PCT/KR2023/015748
(87) International publication number: WO 2024/101682

(57) **Abstract**

Provided are a battery system and a parallel packs control method using the same, the system including: a plurality of battery packs connected in parallel with each other; a plurality of switches connected in series to one of both ends of each battery pack for each of the plurality of battery packs; a battery monitoring integrated circuit (BMIC) acquiring state information including a plurality of pack voltages of the plurality of battery packs; and a main control unit (MCU) generating a plurality of candidate groups including at least one battery pack among the plurality of battery packs based on the plurality of pack voltages, estimating each capacity of the plurality of battery packs based on the state information, determining one final connection group to perform a power operation among the plurality of candidate groups based on each capacity of the plurality of battery packs, and transmitting, to the **BMIC,** a pack control signal for turning on a switch connected to a battery pack belonging to the final connection group among the plurality of switches.

## Description

### Cross-Citation with Related Application(s)

This application claims the benefit of priority based on Korean Patent Application No. 10-2022-0147905 filed in the Korean Intellectual Property Office on November 08, 2022, and Korean Patent Application No. 10-2023-0073573 filed in the Korean Intellectual Property Office on June 08, 2023, and all contents disclosed in the document of the Korean patent application are incorporated as a part of this specification.

### Technical Field

The present disclosure relates to a battery system and a parallel packs control method using the same.

### [Background]

In a system where battery packs are connected in parallel with each other, one combination of the plurality of battery packs may be selected and operated in parallel. A state of charge (SOC) of each of the plurality of battery packs may be considered in order to find the combination of battery packs operated in parallel.

However, there are cases where it is difficult to sufficiently represent performance of the battery pack with the SOC alone. For this reason, there are cases where a battery device in which the battery packs combined in consideration of only the SOC are connected in parallel with each other fails to exhibit optimal performance.

### [Summary]

### [Technical Problem]

The present disclosure attempts to provide a battery system including a plurality of battery packs, i.e., a battery system in which a battery pack combination to be operated in parallel with each other is determined among the plurality of battery packs, and the determined pack combinations are connected in parallel with each other, and a parallel packs control method.

### [Technical Solution]

According to an embodiment, provided is a battery system including: a plurality of battery packs connected in parallel with each other; a plurality of switches connected in series to one of both ends of each battery pack for each of the plurality of battery packs; a battery monitoring integrated circuit (BMIC) acquiring state information including a plurality of pack voltages of the plurality of battery packs; and a main control unit (MCU) generating a plurality of candidate groups including at least one battery pack among the plurality of battery packs based on the plurality of pack voltages, estimating each capacity of the plurality of battery packs based on the state information, determining one final connection group to perform a power operation among the plurality of candidate groups based on each capacity of the plurality of battery packs, and transmitting, to the BMIC, a pack control signal for turning on a switch connected to a battery pack belonging to the final connection group among the plurality of switches.

The MCU may sort the plurality of battery packs in an order of a highest pack voltage, and determine, as the candidate group, a group including a battery pack having a pack voltage which is a pack voltage of a reference pack or less and having a voltage deviation from the pack voltage of the reference pack that has a predetermined reference voltage or less among the plurality of battery packs by using each of the plurality of battery packs as the reference pack based on the sort order.

The MCU may estimate the state of charge (SOC) and state of health (SOH) of the battery pack for each of the plurality of battery packs, and estimate each capacity of the plurality of battery packs based on the SOC and SOH of the battery pack for each of the plurality of battery packs.

The MCU may derive capacity which is sum capacity of at least one battery pack belonging to each of the plurality of candidate groups based on each capacity of the plurality of battery packs.

The MCU may determine the one final connection group among the plurality of candidate groups based on the sum capacity.

When receiving the pack control signal from the MCU, the BMIC may transmit a signal to the plurality of switches by generating the switch control signal for closing a first switch connected to at least one battery pack belonging to the final connection group among the plurality of switches and opening remaining switches excluding the first switch among the plurality of switches.

The MCU may determine a usable battery pack among the plurality of battery packs, sort the usable battery packs in an order of a highest pack voltage, and determine, as the candidate group, a group including a battery pack having a pack voltage which is a pack voltage of a reference pack or less and having a voltage deviation from the pack voltage of the reference pack that has a predetermined reference voltage or less among the usable battery packs by using each of the usable battery packs as the reference pack based on the sort order.

According to another embodiment, provided is a parallel packs control method including: receiving, by a battery management system (BMS), a signal indicating that a vehicle is in a traveling mode from a vehicle control unit (VCU); grouping, by the BMS, a plurality of candidate groups each including at least one battery pack among the plurality of battery packs based on a pack voltage of each of the plurality of battery packs connected in parallel with each other; estimating, by the BMS, the state of charge (SOC) and state of health (SOH) of the battery pack for each of the plurality of battery packs, and estimating each capacity of the plurality of battery packs based on the SOC and SOH of the battery pack for each of the plurality of battery packs; and determining, by the BMS, one final connection group among the plurality of candidate groups based on each capacity of the plurality of battery packs.

The grouping of the plurality of candidate groups may include sorting the plurality of battery packs in an order of a highest pack voltage; and determining, as the candidate group, a group including a battery pack having a pack voltage which is a pack voltage of a reference pack or less and having a voltage deviation from the pack voltage of the reference pack that has a predetermined reference voltage or less among the plurality of battery packs by using each of the plurality of battery packs as the reference pack based on the sort order.

The determining of the one final connection group among the plurality of candidate groups may include deriving capacity which is sum capacity of at least one battery pack belonging to each of the plurality of candidate groups based on each capacity of the plurality of battery packs, and determining the one final connection group among the plurality of candidate groups based on the sum capacity.

The method may further include generating, by the BMS, a switch control signal for closing a first switch connected to the battery pack belonging to the final connection group among a plurality of switches connected in series to one of both ends of each battery pack and opening remaining switches excluding the first switch among the plurality of switches for each of the plurality of battery packs, and transmitting, by the BMS, the switch control signal to the plurality of switches.

The grouping of the plurality of candidate groups may include determining a usable battery pack among the plurality of battery packs, sorting the usable battery packs in the order of the highest pack voltage, and determining, as the candidate group, the group including the battery pack having the pack voltage which is the pack voltage of the reference pack or less and having the voltage deviation from the pack voltage of the reference pack that has the predetermined reference voltage or less among the usable battery packs by using each of the usable battery packs as the reference pack based on the sort order.

### [Advantageous Effects]

The pack combinations to be connected in parallel with each other may be determined in consideration of the energy amount of each of the plurality of battery packs, thus ensuring the battery system including the same to have the maximum energy.

The battery capacity may be estimated in consideration of not only the the state of charge (SOC) of each of the pack combinations to be connected in parallel with each other but also its state of health (SOH), thus having the optimal pack combination determined in consideration of the deviation between the SOH.

The driving range of the vehicle may be improved by connecting the battery system in which the optimal pack combinations are connected in parallel with each other to the vehicle even when each of the plurality of battery packs is differently degraded.

### [Brief Description of the Drawings]

FIG. 1 is a view showing a battery system according to an embodiment.
FIG. 2 is a detailed configuration view of a main control unit (MCU) shown in FIG. 1.
FIG. 3 is a flowchart of a parallel packs control method according to another embodiment.
FIG. 4 is a table showing examples of the pack voltage, state of charge (SOC), and state of health (SOH) of each of the plurality of battery packs.
FIG. 5 is an example view showing a battery device with a switch closed.

### [Detailed Description]

Hereinafter, embodiments disclosed in the specification are described in detail with reference to the accompanying drawings, the same or similar components are denoted by the same or similar reference numerals, and an overlapping description thereof is omitted. Terms "module" and/or "unit" for components described in the following description are used only to make the specification easily understood. Therefore, these terms do not have meanings or roles distinguished from each other in themselves. Further, in describing the embodiments of the present disclosure, omitted is a detailed description of a case where it is decided that the detailed description of the known art related to the present disclosure may obscure the gist of the present disclosure. Furthermore, it is to be understood that the accompanying drawings are provided only to allow the embodiments of the present disclosure to be easily understood, and the spirit of the present disclosure is not limited by the accompanying drawings and includes all the modifications, equivalents, and substitutions included in the spirit and scope of the present disclosure.

Terms including ordinal numbers such as "first," "second" and the like, may be used to describe various components. However, these components are not limited by these terms. The terms are used only to distinguish one component from another component.

It is to be understood that terms "include," "have" and the like used in the present application specify the presence of features, numerals, steps, operations, components, parts or combinations thereof, mentioned in the specification, and do not preclude the presence or possible addition of one or more other features, numerals, steps, operations, components, parts or combinations thereof.

A program implemented as a set of instructions embodying a control algorithm necessary to control another configuration may be installed in a configuration for controlling another configuration under a specific control condition among configurations according to an embodiment. The control configuration may process input data and stored data based on the installed program to thus generate output data. The control configuration may include a non-volatile memory that stores the program and a memory that stores the data.

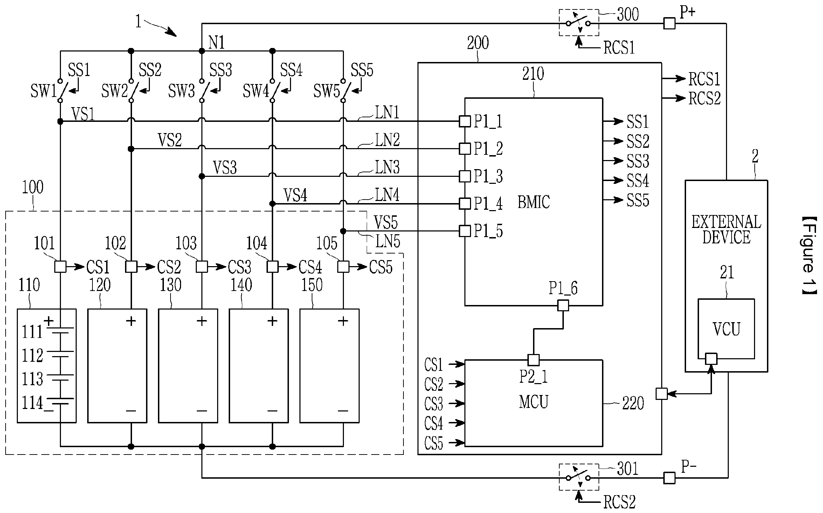

FIG. 1 is a view showing a battery system according to an embodiment.

A battery system 1 may include a battery device 100, a battery management system (BMS) 200, relays 300 and 301, and a plurality of switches SW1 to SW5.

The battery device 100 may include a plurality of battery packs 110, 120, 130, 140, and 150 connected in parallel with each other. FIG. 1 shows that the number of battery packs 110, 120, 130, 140, and 150 is five, the present disclosure is not limited thereto, and the battery system 1 may include three or more battery packs.

Each of the plurality of battery packs 110, 120, 130, 140, and 150 may include a plurality of battery cells. For example, the battery pack 110 may include a plurality of battery cells 111 to 114 connected in series with each other. FIG. 1 shows that the number of the plurality of battery cells 111 to 114 is four, the present disclosure is not limited thereto, and each of the plurality of battery packs 110, 120, 130, 140, and 150 may be implemented as two or more battery cells connected in series with each other, the plurality of battery cells in which two or more battery cells connected in parallel with each other are connected in series with each other, or two or more battery cells connected in parallel with each other.

One end of each of the relays 300 and 301 may be connected to the battery device 100, and the other end of each of the relays 300 and 301 may be connected to at least one component of the external device 2. Closing and opening of the relays 300 and 301 may be controlled based on relay control signals RCS1 and RCS2 supplied from the BMS 200.

The battery system 1 may be connected to the external device 2. The external device 2 may include a loading or charging device such as an inverter or a converter. When the external device 2 is a charger, both ends P+ and P-of the battery system 1 may be connected to the charger and supplied with power from the charger to be charged. When the external device 2 is a load, both the ends P+ and P- of the battery system 1 may be connected to the load, and power supplied by the battery pack 10 may thus be discharged through the load.

The external device 2 may include a vehicle control unit (VCU) 21 included in a vehicle. The BMS 200 may communicate with the VCU 21 to exchange a signal. The VCU 21 may receive a drive mode request for the vehicle from the BMS 200. The drive mode may include a plurality of vehicle modes such as a drive mode where a gear shift is in a "D" gear, a stop mode where the vehicle is stopped although the gear shift is in the "D" gear, a parking mode where the gear shift is in a "P" gear, and an inspection mode to inspect the vehicle. When receiving the drive mode request, the VCU 21 may transmit a signal indicating one of the plurality of vehicle modes to the BMS 200 in response to the request.

When a traveling mode is the drive mode indicated by the signal received by the BMS 200 from the VCU 21, the BMS 200 may determine which battery pack to perform power operation among the plurality of battery packs 110, 120, 130, 140, and 150, and turn on a switch connected to the determined battery pack among the plurality of switches SW1 to SW5. The battery pack may then be connected to a node N1. The power operation may include a discharging operation to supply power to the outside and a charging operation by power supplied from the outside. Here, at least one battery pack to perform the power operation may refer to two or more battery packs among the plurality of battery packs 110, 120, 130, 140, and 150, and in this case, the battery packs may be connected in parallel with each other.

Respective one ends of the plurality of switches SW1 to SW5 may be connected with each other at the node N1, and the other end of each of the plurality of switches SW1 to SW5 may be connected in series to one end of each of the plurality of battery packs 110, 120, 130, 140, and 150.

One end of the switch SW1 may be connected to the relay 300 at the node N1, and the other end of the switch SW1 may be connected to a positive terminal of the battery pack 110. One end of the switch SW2 may be connected to the relay 300 at the node N1, and the other end of the switch SW2 may be connected to a positive terminal of the battery pack 120. One end of the switch SW3 may be connected to the relay 300 at the node N1, and the other end of the switch SW3 may be connected to a positive terminal of the battery pack 130. One end of the switch SW4 may be connected to the relay 300 at the node N1, and the other end of the switch SW4 may be connected to a positive terminal of the battery pack 140. One end of the switch SW5 may be connected to the relay 300 at the node N1, and the other end of the switch SW5 may be connected to a positive terminal of the battery pack 150.

The BMS 200 may include a battery monitoring integrated circuit (BMIC) 210, and a main control unit (MCU) 220.

The BMIC 210 may monitor a plurality of pack voltages of the plurality of battery packs 110, 120, 130, 140, and 150. The BMIC 210 may receive a plurality of voltage measurement signals VS1 to VS5 from respective ends of the plurality of battery packs 110, 120, 130, 140, and 150. The BMIC 210 may include a plurality of terminals P1_1 to P1_5. Each of the plurality of terminals P1_1 to P1_5 may be connected to one end of each of the plurality of battery packs 110, 120, 130, 140, and 150 through each of a plurality of wirings LN1 to LN5. The BMIC 210 may receive the plurality of voltage measurement signals VS1 to VS5 through the plurality of terminals P1_1 to P1_5.

The positive terminal of the battery pack 110 may be connected to the terminal P1_1 through the wiring LN1, and the BMIC 210 may acquire the voltage measurement signal VS1 measured from the positive terminal of the battery pack 110 through the terminal P1_1. The positive terminal of the battery pack 120 may be connected to the terminal P1_2 through the wiring LN2, and the BMIC 210 may acquire the voltage measurement signal VS2 measured from the positive terminal of the battery pack 120 through the terminal P1_2. The positive terminal of the battery pack 130 may be connected to the terminal P1_3 through the wiring LN3, and the BMIC 210 may acquire the voltage measurement signal VS3 measured from the positive terminal of the battery pack 130 through the terminal P1_3. The positive terminal of the battery pack 140 may be connected to the terminal P1_4 through the wiring LN4, and the BMIC 210 may acquire the voltage measurement signal VS4 measured from the positive terminal of the battery pack 140 through the terminal P1_4. The positive terminal of the battery pack 150 may be connected to the terminal P1_5 through the wiring LN5, and the BMIC 210 may acquire the voltage measurement signal VS5 measured from the positive terminal of the battery pack 150 through the terminal P1_5.

The BMIC 210 may derive each pack voltage of the plurality of battery packs 110, 120, 130, 140, and 150 from the plurality of voltage measurement signals VS1 to VS5. When receiving a request signal from the MCU 220, the BMIC 210 may acquire state information of the plurality of battery packs 110, 120, 130, 140, and 150 based on the request signal, and transmit a signal indicating the acquired state information to the MCU 220. The state information of the plurality of battery packs 110, 120, 130, 140, and 150 may include the pack voltage, pack temperature, pack current, or the like of each battery pack. For example, when receiving the request signal for requesting the battery pack voltage or the battery pack temperature from the MCU 220, the BMIC 210 may measure the pack voltage or pack temperature of each of the plurality of battery packs 110, 120, 130, 140, and 150, and transmit the signal indicating the measured pack voltage or pack temperature to the MCU 220.

The battery device 100 may further include current sensors 101 to 105 respectively corresponding to the plurality of battery packs 110, 120, 130, 140, and 150. The current sensors 101 to 105 may periodically measure the pack current of each of the plurality of battery packs 110, 120, 130, 140, and 150, and provide signals indicating current measurement results (hereinafter, "current measurement signals") CS1 to CS5 to the MCU 220. The MCU 220 may receive the plurality of current measurement signals CS1 to CS5 from the plurality of current sensors 101 to 105, and use the received current measurement signals CS1 to CS5 to estimate a state of charge (SOC) of each of the plurality of battery packs. For example, when using current integration result, the MCU 220 may estimate the SOC by integrating values indicated by the current measurement signals CS1 to CS5. In addition, the MCU 220 may use each of the current measurement signals CS1 to CS5 received from the current sensor 101 to 105 when calculating an amount of charge charged in or discharged from each battery pack in order to estimate each capacity of the plurality of battery packs.

FIG. 1 shows that the plurality of current sensors 101 to 105 directly provide the current measurement signals to the MCU 220, and the present disclosure is not limited thereto. The plurality of current sensors 101 to 105 may transmit the current measurement signals to the BMIC 210, and when receiving the request signal requesting the battery pack current from the MCU 220, the BMIC 210 may transmit information on the plurality of current measurement signals acquired from the plurality of current sensors to the MCU 220.

The MCU 220 may generate a plurality of candidate groups based on the pack voltage of each of the plurality of battery packs 110, 120, 130, 140, and 150, determine one group to perform the power operation among the plurality of candidate groups based on the state information of the plurality of battery packs 110, 120, 130, 140, and 150, and transmit, to the MIC 210, a pack control signal for turning on the switch connected to the battery pack belonging to one determined group among the plurality of switches SW1 to SW5.

The MCU 220 may generate the plurality of candidate groups including at least one battery pack among the plurality of battery packs 110, 120, 130, 140, and 150 based on the signals indicating the plurality of pack voltages received from the BMIC 210. The MCU 220 may estimate the state of charge (SOC) and state of health (SOH) of each of the plurality of battery packs 110, 120, 130, 140, and 150, and estimate each capacity of the plurality of battery packs 110, 120, 130, 140, and 150 based on the estimated SOC and SOH. The MCU 220 may determine one group (hereinafter, "final connection group") to perform the power operation among the plurality of candidate groups based on each capacity of at least one battery pack belonging to each of the plurality of candidate groups.

The SOC of a battery may indicate the remaining capacity charged in the battery, and may be used as one of indicators representing performance of the battery.

The MCU 220 may estimate the SOC in a unit of the battery cell included each of in the plurality of battery packs 110, 120, 130, 140, and 150, and estimate a representative value (e.g., average value or median value) of the SOC of the battery cell included in each of the plurality of battery packs 110, 120, 130, 140, and 150 as a SOC of the pack. The MCU 220 may estimate the SOC in the unit of the cell by using a current integration method or a method using a relationship function or table between an open-circuit voltage (OCV) and the SOC. Alternatively, the MCU 220 may estimate the SOC of the pack based on each pack current of the plurality of battery packs 110, 120, 130, 140, and 150, and a value of the cell voltage, cell temperature, or the like of the battery cell included in each of the plurality of battery packs 110, 120, 130, 140, and 150. Alternatively, the MCU 220 may estimate the SOC of the pack based on an equivalent circuit (i.e., model equivalent circuit) modeling an electrical property of the battery pack. The model equivalent circuit may include the resistance component and capacitance component of the cell included in the battery pack, a wiring resistance connecting the plurality of cells with each other, or the like. A method of the MCU 220 estimating the SOC of each of the plurality of battery packs 110, 120, 130, 140, and 150 may be one of various known methods.

The SOH of the battery may represent the deterioration level or remaining lifespan of the battery, and may be used as one of the indicators representing the performance of the battery. The SOH may represent a current each capacity of battery cell that is compared to an initial capacity of the battery cell included in the plurality of battery packs 110, 120, 130, 140, and 150. Here, the capacity may represent a total amount of charge that may be contained in each cell.

The MCU 220 may estimate the SOH in the unit of the battery cell included in each of the plurality of battery packs 110, 120, 130, 140, and 150, and estimate the representative value (e.g., average value or median value) of the SOH of the battery cell included in each of the plurality of battery packs 110, 120, 130, 140, and 150 as the SOH of the pack. The MCU 220 may estimate the SOH in a unit of the cell by estimating the SOH of the cell based on the SOC of each of the battery cells, or using a method of measuring the capacity of the corresponding cell based on the amount of charge required for its charging or discharging, or the like. A method of the MCU 220 estimating the SOH of each of the plurality of battery packs 110, 120, 130, 140, and 150 may be one of various known methods.

The MCU 220 may generate a pack control signal for connecting at least one battery pack belonging to the final connection group and transmit the same to the BMIC 210. When receiving the pack control signal, the BMIC 210 may generate a plurality of switch control signals SS1 to SS5 based on the pack control signal, and transmit the same to the plurality of switches SW1 to SW5 to thus control the opening or closing operation of the plurality of switches SW1 to SW5.

The plurality of switch control signals SS1 to SS5 may be signals for closing the switch corresponding to at least one battery pack belonging to the final connection group among the plurality of switches SW1 to SW5 and opening the remaining switches. For example, when the battery packs belonging to the final connection group is the battery pack 140 and the battery pack 150, the switch control signals SS4 and SS5 may be on-level signals, and the switch control signals SS1 to SS3 may be off-level signals.

The plurality of switches SW1 to SW5 may perform switching operations based on the plurality of switch control signals SS1 to SS5. The switch receiving the on-level switch control signal may be closed, and the switch receiving the off-level switch control signal may be opened. For example, the switches SW4 and SW5 respectively receiving the on-level switch control signals SS4 and SS5 may be closed.

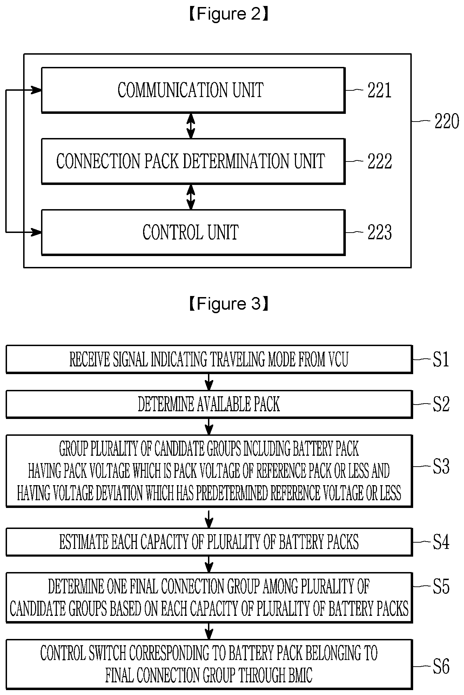

FIG. 2 is a detailed configuration view of the main control unit (MCU) shown in FIG. 1.

The MCU 220 may include a communication unit 221, a connection pack determination unit 222, and a control unit 223.

The communication unit 221 may communicate with the VCU 21 to transmit and receive the information. The control unit 223 may control the communication unit 221 to transmit the drive mode request to the VCU 21. The communication unit 221 may transmit the signal received from the VCU 21 to the control unit 223. In this way, the control unit 223 may transmit the drive mode request to the VCU 21 through the communication unit 221 and receive the signal indicating one of the plurality of vehicle modes from the VCU 21. The VCU 21 may generate the signal indicating the drive mode of the vehicle based on a random time point in a period from a time point when the drive mode request is received from the BMS 200 to a time point when the generated signal indicating one of the plurality of vehicle modes is transmitted to the BMS 200.

When receiving the signal indicating the traveling mode, the control unit 223 may instruct the connection pack determination unit 222 to determine the final connection group among the plurality of battery packs 110, 120, 130, 140, and 150. The connection pack determination unit 222 may perform an operation to determine the final connection group among the plurality of battery packs 110, 120, 130, 140, and 150 (hereinafter, a connection group determination operation) based on the instruction.

The control unit 223 may generate the pack control signal for controlling the closing of the switch connected to at least one battery pack belonging to the final connection group determined by the connection pack determination unit 222 among the plurality of switches SW1 to SW5, and transmit the pack control signal to the BMIC 210 through the communication unit 221.

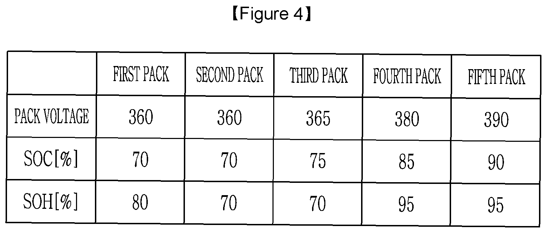

Hereinafter, the description describes a detailed operation of each of the communication unit 221, the connection pack determination unit 222, and the control unit 223 with reference to FIGS. 3 and 4.

FIG. 3 is a flowchart of a parallel packs control method according to another embodiment.

A communication unit 221 may receive a signal indicating that a vehicle is in a traveling mode from a vehicle control unit (VCU) 21 (S1). The communication unit 221 may transmit the signal received from the VCU 21 to a control unit 223. When receiving the signal indicating the traveling mode in response to a drive mode request, the control unit 223 may instruct a connection pack determination unit 222 to determine a final connection group among a plurality of battery packs 110, 120, 130, 140, and 150. The connection pack determination unit 222 may perform a connection group determination operation based on the instruction.

The connection pack determination unit 222 may determine a usable pack among the plurality of battery packs 110, 120, 130, 140, and 150 (S2). Here, the usable pack may be a battery pack excluding a defective pack among the plurality of battery packs 110, 120, 130, 140, and 150.

The defective pack may refer to a pack having a malfunction occurring therein and discharging operation and/or charging operation made difficult among the plurality of battery packs 110, 120, 130, 140, and 150.

The connection pack determination unit 222 may derive a pack voltage of each of the plurality of battery packs 110, 120, 130, 140, and 150 based on signals received from each of the plurality of battery packs 110, 120, 130, 140, and 150, and derive the pack temperature and/or pack current of each of the plurality of battery packs 110, 120, 130, 140, and 150 based on a signal received from a temperature sensor and/or a current sensor, disposed in each of the plurality of battery packs 110, 120, 130, 140, and 150. The connection pack determination unit 222 may determine, as the defective pack, a battery pack in which at least one of the pack voltage, pack temperature, and pack current of each of the plurality of battery packs 110, 120, 130, 140, and 150 is outside a predetermined normal range.

The connection pack determination unit 222 may determine a problematic battery pack among the plurality of battery packs 110, 120, 130, 140, and 150 as the defective pack through a read only memory (ROM) diagnosis when booting a main control unit (MCU) 220.

Hereinafter, the description is provided assuming that the plurality of battery packs 110, 120, 130, 140, and 150 in FIG. 1 are all the usable packs.

The connection pack determination unit 222 may group a plurality of candidate groups including a battery pack having a pack voltage which is a pack voltage of a reference pack or less and having a voltage deviation which has a predetermined reference voltage or less by using each usable battery pack as the reference pack (S3).

The description describes that the connection pack determination unit 222 groups the plurality of candidate groups based on the usable pack(s) with reference to FIG. 3, and the present disclosure is not limited thereto. The connection pack determination unit 222 may group the plurality of candidate groups including the battery pack having the pack voltage which is the pack voltage of the reference pack or less and having the voltage deviation which has the predetermined reference voltage or less by using each of the plurality of battery packs 110, 120, 130, 140, and 150 as the reference pack after the step S1.

The BMIC 210 may transmit signals indicating the plurality of pack voltages to the MCU 220. The connection pack determination unit 222 may generate the plurality of candidate groups based on the plurality of pack voltages acquired based on the signals received from a battery monitoring integrated circuit (BMIC) 210. Hereinafter, the description describes the operation of the connection pack determination unit 222 with reference to an example of FIG. 4.

FIG. 4 is a table showing examples of the pack voltage, state of charge (SOC), and state of health (SOH) of each of the plurality of battery packs.

The "first pack", "second pack", "third pack", "fourth pack", and "fifth pack" of FIG. 4 may respectively correspond to the battery pack 110, battery pack 120, battery pack 130, battery pack 140, and battery pack 150 of FIG. 1.

Referring to FIG. 4, the pack voltage of the battery pack 110 is 360 V, the pack voltage of the battery pack 120 is 360 V, the pack voltage of the battery pack 130 is 365 V, the pack voltage of the battery pack 140 is 380 V, and the pack voltage of the battery pack 150 is 390 V. Hereinafter, the description is provided assuming that 10 V is the predetermined reference voltage which has a reference value of the voltage deviation.

The connection pack determination unit 222 may sort the plurality of battery packs 110, 120, 130, 140, and 150 in an order of the highest pack voltage, set one of the plurality of battery packs 110, 120, 130, 140, and 150 as the reference pack based on the sort order, and comparing the predetermined reference voltage with the voltage deviation between the pack voltages, i.e., the pack voltage of the battery pack which is the pack voltage of the reference pack or less among the plurality of battery packs 110, 120, 130, 140, and 150 and the pack voltage of the reference pack.

Alternatively, the connection pack determination unit 222 may sort the usable battery packs among the plurality of battery packs 110, 120, 130, 140, and 150 in the order of the highest pack voltage, set one of the usable battery packs as the reference pack based on the sort order, and compare the predetermined reference voltage with the voltage deviation between the pack voltages, i.e., the pack voltage of the battery pack which is the pack voltage of the reference pack or less among the usable battery packs and the pack voltage of the reference pack.

The connection pack determination unit 222 may sort the plurality of battery packs 110, 120, 130, 140, and 150 in the order of the highest pack voltage: the battery pack 150, the battery pack 140, the battery pack 130, the battery pack 120, and then the battery pack 110. The connection pack determination unit 222 may derive the plurality of candidate groups by using each of the battery pack 150, the battery pack 140, the battery pack 130, the battery pack 120, and the battery pack 110 as the reference pack. The plurality of candidate groups may be derived using each of the plurality of battery packs 110, 120, 130, 140, and 150 as the reference pack, and the maximum value of the number of candidate groups may thus be the same as the number of battery packs.

The connection pack determination unit 222 may use the battery pack 150 as the reference pack, and determine, as a first group, each of the battery packs 140 and 150 whose voltage deviation has the reference voltage of 10 V or less based on 390 V which is the pack voltage of the battery pack 150.

The connection pack determination unit 222 may use the battery pack 140 as the reference pack, and determine, as a second group, the battery pack 140 whose voltage deviation has the reference voltage of 10 V or less based on 380 V which is the pack voltage of the battery pack 140.

The connection pack determination unit 222 may use the battery pack 130 as the reference pack, and determine, as a third group, each of the battery packs 110, 120 and 130 whose voltage deviation has the reference voltage of 10 V or less based on 365 V which is the pack voltage of the battery pack 130.

The connection pack determination unit 222 may use the battery pack 120 as the reference pack, and determine, as a fourth group, the battery packs 110 and 120 whose voltage deviation has the reference voltage of 10 V or less based on 360 V which is the pack voltage of the battery pack 120.

When the group generated based on each reference pack overlaps another group, the connection pack determination unit 222 may use one of the overlapping groups as the candidate group. When the connection pack determination unit 222 uses the battery pack 110 as the reference pack, a fifth group may overlap the fourth group, the fifth group including each of the battery packs 110 and 120 whose voltage deviation has the reference voltage of 10 V or less based on 360 V which is the pack voltage of the battery pack 110. Therefore, the connection pack determination unit 222 may determine the first to fourth groups excluding the fifth group as the candidate groups.

The connection pack determination unit 222 may estimate each capacity of the plurality of battery packs 110, 120, 130, 140, and 150 (S4). The connection pack determination unit 222 may estimate the state of charge (SOC) and state of health (SOH) of each of the plurality of battery packs 110, 120, 130, 140, and 150, and estimate each capacity of the plurality of battery packs 110, 120, 130, 140, and 150 based on the initial capacity, SOC value, and SOH value of the battery pack.

The connection pack determination unit 222 may estimate a SOC of the battery pack for each of the plurality of battery packs 110, 120, 130, 140, and 150. Referring to FIG. 4, the connection pack determination unit 222 may estimate the respective SOCs of the battery packs 110, 120, 130, 140, and 150 as 70%, 70%, 75%, 85%, and 90%.

The connection pack determination unit 222 may estimate the SOH of the battery pack for each of the plurality of battery packs 110, 120, 130, 140, and 150. Referring to FIG. 4, the connection pack determination unit 222 may estimate the respective SOHs of the battery packs 110, 120, 130, 140, and 150 as 80%, 70%, 70%, 95%, and 95%.

The connection pack determination unit 222 may estimate initial each capacity of of the plurality of battery packs 110, 120, 130, 140, and 150, based on initial each capacity of of battery cells included in each of the plurality of battery packs 110, 120, 130, 140, and 150. Hereinafter, for convenience of explanation, it is assumed that 50 Ah is the initial each capacity of of the plurality of battery packs 110, 120, 130, 140, and 150.

The connection pack determination unit 222 may estimate each capacity of the plurality of battery packs 110, 120, 130, 140, and 150 based on the initial capacity, SOC value, and SOH value of each of the plurality of battery packs 110, 120, 130, 140, and 150. The connection pack determination unit 222 may estimate each capacity of the plurality of battery packs 110, 120, 130, 140, and 150 by multiplying the initial capacities, SOC values, and SOH values of each of the plurality of battery packs 110, 120, 130, 140, and 150.

Referring to FIG. 4, the capacity of the battery pack 110 may be 50 Ah*0.7*0.8=28 Ah, the capacity of the battery pack 120 may be 50 Ah*0.7*0.7=24.5 Ah, the capacity of the battery pack 130 may be 50 Ah*0.75*0.7=26.2 Ah, the capacity of the battery pack 140 may be 50 Ah*0.85*0.95=40.3 Ah, and the capacity of the battery pack 150 may be 50 Ah*0.9*0.95=42.7 Ah.

The connection pack determination unit 222 may determine one final connection group among the plurality of candidate groups based on each capacity of the plurality of battery packs 110, 120, 130, 140, and 150 (S5). The connection pack determination unit 222 may acquire sum capacity of at least one battery pack belonging to each of the plurality of candidate groups, and determine the candidate group having the largest value of the sum capacity as the final connection group.

Referring to FIG. 4, sum capacity of the first group including the battery pack 140 and the battery pack 150 may be 40.3 Ah+42.7 Ah=83.0 Ah. Sum capacity of the second group including the battery pack 140 may be 40.3 Ah. Sum capacity of the third group including the battery pack 110, the battery pack 120, and the battery pack 130 may be 28 Ah+24.5 Ah+26.2 Ah=78.7 Ah. Sum capacity of the fourth group including the battery pack 110 and the battery pack 120 may be 28 Ah+24.5 Ah=52.5 Ah.

The connection pack determination unit 222 may determine, as the final connection group, the first group having the largest value (i.e., 83.0 Ah) among the sum capacities the plurality of battery packs 110, 120, 130, 140, and 150. Therefore, the battery pack connected to node N1 among the plurality of battery packs 110, 120, 130, 140, and 150 may be the battery pack 140 and the battery pack 150 that belong to the first group.

When the connection pack determination unit 222 determines the final connection group, the control unit 223 may generate a pack control signal causing at least one battery pack belonging to the final connection group to perform a power operation. Referring to FIG. 4, the pack control signal may include a signal causing the battery pack 140 and the battery pack 150 to perform the power operation. The communication unit 221 may transmit the pack control signal to the BMIC 210, and a battery management system (BMS) 200 may control a switch corresponding to the battery pack belonging to the final connection group through the BMIC 210 (S6).

The BMIC 210 may control switching operations of a plurality of switches SW1 to SW5 based on the pack control signal. When receiving the pack control signal, the BMIC 210 may generate a plurality of switch control signals SS1 to SS5 for closing the switch corresponding to at least one battery pack belonging to the final connection group among the plurality of switches SW1 to SW5 and opening the remaining switches. For example, the BMIC 210 may set each of the switch control signals SS4 and SS5 to have an on-level and each of the switch control signals SS1 to SS3 to have an off-level, the switch control signals SS4 and SS5 respectively corresponding to the battery pack 140 and the battery pack 150, which are battery packs belonging to the final connection group. The BMIC 210 may transmit the plurality of switch control signals SS1 to SS5 to the plurality of switches SW1 to SW5.

Among the plurality of switches SW1 to SW5, the switch receiving the on-level control signal may be closed, and the switch receiving the off-level switch control signal may be opened. For example, the switch SW4 and the switch SW5 that receive the on-level switch control signals SS4 and SS5 may be closed, and the switch SW1, the switch SW2, and the switch SW3 that receive the off-level switch control signals SS1-SS3 may be opened.

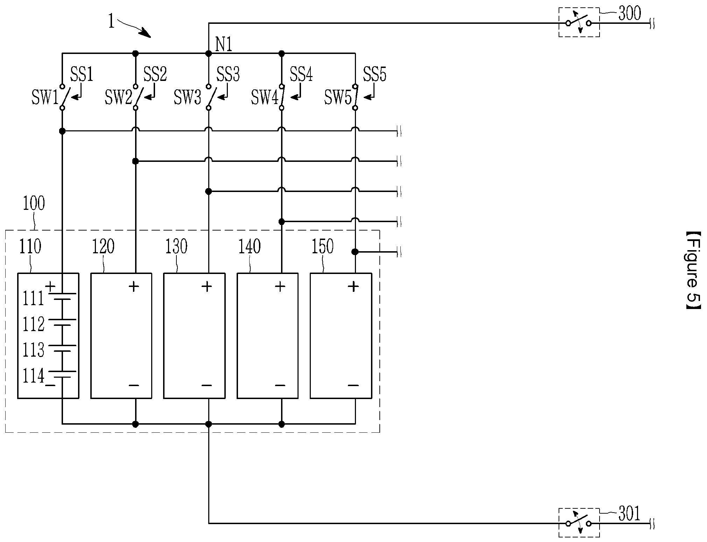

FIG. 5 is an example view showing the battery device with a switch closed.

Referring to FIG. 5, among the plurality of battery packs 110, 120, 130, 140, and 150 belonging to the battery device 100 in FIG. 1, the switch SW4 and the switch SW5 may be closed, and the switch SW1, the switch SW2, and the switch SW3 may be open. The battery pack 140 and the battery pack 150 among the plurality of battery packs 110, 120, 130, 140, and 150 may perform the power operation based on the switching operations of the plurality of switches SW1 to SW5.

In an embodiment, the capacities of the plurality of battery packs 110, 120, 130, 140, and 150 may be estimated in consideration of not only the SOC of the battery pack but also the SOH of the battery pack, and the battery pack to be connected in parallel to the battery system 1 may be determined based on the estimated capacity. The capacity of the battery pack determined in consideration of the SOC and SOH of the battery pack may allow an actual energy amount of the battery pack to be estimated. Accordingly, among the plurality of battery packs 110, 120, 130, 140, and 150, the battery device 100 in which the pack combinations are connected in parallel with each other in consideration of the actual energy amount, may have optimal performance.

Although the embodiments of the present disclosure have been described in detail hereinabove, the scope of the present disclosure is not limited thereto. Various modifications and improvements made by those skilled in the art to which the present disclosure pertains also belong to the scope of the present disclosure.

## Claims

1. A battery system comprising:
a plurality of battery packs connected in parallel with each other;
a plurality of switches connected in series to one of both ends of each battery pack for each of the plurality of battery packs;
a battery monitoring integrated circuit (BMIC) acquiring state information including a plurality of pack voltages of the plurality of battery packs; and
a main control unit (MCU) generating a plurality of candidate groups including at least one battery pack among the plurality of battery packs based on the plurality of pack voltages, estimating each capacity of the plurality of battery packs based on the state information, determining one final connection group to perform a power operation among the plurality of candidate groups based on each capacity of the plurality of battery packs, and transmitting, to the BMIC, a pack control signal for turning on a switch connected to a battery pack belonging to the final connection group among the plurality of switches.

2. The system of claim 1, wherein
the MCU sorts
the plurality of battery packs in an order of a highest pack voltage, and determines, as the candidate group, a group including a battery pack having a pack voltage which is a pack voltage of a reference pack or less and having a voltage deviation from the pack voltage of the reference pack that has a predetermined reference voltage or less among the plurality of battery packs by using each of the plurality of battery packs as the reference pack based on the sort order.

3. The system of claim 2, wherein
the MCU estimates
the state of charge (SOC) and state of health (SOH) of the battery pack for each of the plurality of battery packs, and estimates each capacity of the plurality of battery packs based on the SOC and SOH of the battery pack for each of the plurality of battery packs.

4. The system of claim 3, wherein
the MCU derives
capacity which is sum capacity of at least one battery pack belonging to each of the plurality of candidate groups based on each capacity of the plurality of battery packs.

5. The system of claim 4, wherein
the MCU determines
the one final connection group among the plurality of candidate groups based on the sum capacity.

6. The system of claim 5, wherein
when receiving the pack control signal from the MCU, the BMIC transmits
a signal to the plurality of switches by generating the switch control signal for closing a first switch connected to at least one battery pack belonging to the final connection group among the plurality of switches and opening remaining switches excluding the first switch among the plurality of switches.

7. The system of claim 1, wherein
the MCU determines
a usable battery pack among the plurality of battery packs, sorts the usable battery packs in an order of a highest pack voltage, and determines, as the candidate group, a group including a battery pack having a pack voltage which is a pack voltage of a reference pack or less and having a voltage deviation from the pack voltage of the reference pack that has a predetermined reference voltage or less among the usable battery packs by using each of the usable battery packs as the reference pack based on the sort order.

8. A parallel packs control method comprising:
receiving, by a battery management system (BMS), a signal indicating that a vehicle is in a traveling mode from a vehicle control unit (VCU);
grouping, by the BMS, a plurality of candidate groups each including at least one battery pack among the plurality of battery packs based on a pack voltage of each of the plurality of battery packs connected in parallel with each other;
estimating, by the BMS, the state of charge (SOC) and state of health (SOH) of the battery pack for each of the plurality of battery packs, and estimating, by the BMS, each capacity of the plurality of battery packs based on the SOC and SOH of the battery pack for each of the plurality of battery packs; and
determining, by the BMS, one final connection group among the plurality of candidate groups based on each capacity of the plurality of battery packs.

9. The method of claim 8, wherein
the grouping of the plurality of candidate groups includes
sorting the plurality of battery packs in an order of a highest pack voltage; and
determining, as the candidate group, a group including a battery pack having a pack voltage which is a pack voltage of a reference pack or less and having a voltage deviation from the pack voltage of the reference pack that has a predetermined reference voltage or less among the plurality of battery packs by using each of the plurality of battery packs as the reference pack based on the sort order.

10. The method of claim 9, wherein
the determining of the one final connection group among the plurality of candidate groups includes
deriving capacity which is sum capacity of at least one battery pack belonging to each of the plurality of candidate groups based on each capacity of the plurality of battery packs, and
determining the one final connection group among the plurality of candidate groups based on the sum capacity.

11. The method of claim 9, further comprising
generating, by the BMS, a switch control signal for closing a first switch connected to the battery pack belonging to the final connection group among a plurality of switches connected in series to one of both ends of each battery pack and opening remaining switches excluding the first switch among the plurality of switches for each of the plurality of battery packs, and transmitting, by the BMS, the switch control signal to the plurality of switches.

12. The method of claim 9, wherein
the grouping of the plurality of candidate groups includes
determining a usable battery pack among the plurality of battery packs,
sorting the usable battery packs in the order of the highest pack voltage, and determining, as the candidate group, the group including the battery pack having the pack voltage which is the pack voltage of the reference pack or less and having the voltage deviation from the pack voltage of the reference pack that has the predetermined reference voltage or less among the usable battery packs by using each of the usable battery packs as the reference pack based on the sort order.
